# EUROPÄISCHE PATENTSCHRIFT

(11) **EP 1 631 867 B1**
(45) Veröffentlichungstag und Bekanntmachung des Hinweises auf die Patenterteilung: **30.12.2009**
(21) Anmeldenummer: 04739767.4
(22) Anmeldetag: 09.06.2004
(51) Int. Cl.: G05B 19/418, D21G 9/00, G05B 19/042, G05B 19/05

(54) **VERFAHREN UND VORRICHTUNG ZUR ERMITTLUNG DER URSACHEN VON STÖRUNGEN IN INDUSTRIELLEN PROZESSEN**
METHOD AND DEVICE FOR IDENTIFYING THE CAUSE OF FAILURES IN INDUSTRIAL PROCESSES
PROCEDE ET DISPOSITIF POUR DETERMINER LES CAUSES DE DEFAILLANCES DANS DES PROCESSUS INDUSTRIELS

(30) Priorität: 10.06.2003 DE 10326427
(43) Veröffentlichungstag der Anmeldung: 08.03.2006
(73) Patentinhaber: SIEMENS AKTIENGESELLSCHAFT, 80333 München (DE)
(72) Erfinder: HAAKS, Stefan, 91052 Erlangen (DE); MICHAELIS, Gerd, 91096 Möhrendorf (DE); WEGNER, Christian-Marius, 91522 Ansbach (DE)
(86) Internationale Anmeldenummer: PCT/EP2004/006264
(87) Internationale Veröffentlichungsnummer: WO 2004/109012

(56) Entgegenhaltungen:
- EP-A- 1 087 212
- DE-A- 3 539 354
- DE-A- 19 913 926
- DE-A- 19 953 189
- US-A- 5 771 374

## Beschreibung

Die Erfindung bezieht sich auf ein Verfahren zur Ermittlung der Ursachen von Störungen in industriellen Prozessen, insbesondere kontinuierlichen Prozessen mit durchlaufenden Warenbahnen wie z.B. Papier, Textilien, Kunststoff- oder Metallfolien.

Anlagen und Maschinen für industrielle Prozesse, insbesondere Prozesse mit durchlaufenden Warenbahnen, z.B. Prozesse zur Herstellung von Papier, Textilien, Kunststoff- oder Metallfolien, sind häufig sehr komplexe Kombinationen aus Antriebs- und Automatisierungskomponenten. Aufgrund dieser Tatsache sind Störungen in den Prozessen sehr schwer zu erfassen und zu bewerten, u.a. deshalb, weil sie sich in der Regel an verschiedenen Stellen in der Anlage oder Maschine bemerkbar machen. Aus diesem Grund lässt sich, insbesondere bei komplexen Prozessen, keine eindeutige Wirkungskette zwischen einer Ursache und einer Folge einer Störung erkennen.

Insbesondere sporadische Störungen können einen Prozess empfindlich behindern und z.B. bei einem Herstellungsprozess die Herstellungskapazität begrenzen und zu beträchtlichen Kosten führen. Solche Störungen können als Ergebnis einer Vielzahl von Faktoren technischer oder technologischer Art entstehen, die zwar nicht groß genug sind, um eine Unterbrechung der Fertigung zu bewirken, aber zu Qualitäts- oder Durchlaufproblemen führen können.

Im Extremfall können Störungen aber auch zu einer Unterbrechung des Prozesses führen. So kann z.B. bei einem Herstellungsprozess für eine Warenbahn ein Riss der Warenbahn ("Bahnriss") zu einer Unterbrechung der Fertigung mit entsprechend hohen Ausfallkosten führen.

Ein herkömmlicher Ansatz zur Lösung des Problems besteht für einen Prozess- bzw. Anlagenbetreiber darin, Experten für die einzelnen Teilsysteme (z.B. Automatisierungssystem, Antriebssystem) zu bestellen, die dann z.B. mit Hilfe visueller Verfahren (z.B. mit Hilfe von Hochgeschwindigkeitskameras) versuchen, die Ursache der Störungen zu ermitteln. Diese Methode erfasst jedoch insbesondere bei komplexen Anlagen wesentliche Bereiche der Anlage, insbesondere das Antriebssystem, nur unvollständig, ist deshalb in ihrer Aussage begrenzt und führt insgesamt zu keiner nachhaltigen Beseitigung der Störungen.

Weiterhin wird in der noch unveröffentlichten deutschen Patentanmeldung mit amtlichen Anmeldeaktenzeichen DE 10202092.2 sowie in der noch unveröffentlichten Internationalen Patentanmeldung mit amtlichen Aktenzeichen PCT/DE/03/00093 ein einheitliches und modular erweiterbares System zum weitestgehend rückwirkungsfreien und zeitsynchronen Messen und Analysieren von weit verteilten Signalen von aus mehreren Teilprozessen bestehenden industriellen Prozessen beschrieben. Mittels Messköpfen werden beliebige in den Teilprozessen vorliegende Signale erfasst und gegebenenfalls mit einem Zeitstempel versehen in einer vorgegebenen Form als Mess- oder Zeitsignale an ein Messbussystem weitergegeben, wobei das Messbussystem nicht identisch mit vorhandenen, der Automatisierung dienenden Bussystemen ist. Unter einem Zeitsignal wird hierbei ein Messsignal mit einem Zeitstempel verstanden. Die Mess- und/oder zeitsignale werden von Datenkonzentratoren weiterverarbeitet. Lokale oder vom industriellen Prozess beliebig entfernt vorgesehene Auswerteeinheiten und/oder Anzeigeeinheiten ermöglichen die weitere Verarbeitung beziehungsweise Visualisierung von Mess- und/oder Zeitsignalen.

Aus der DE 35 39 354 A1 ist ein Verfahren gemäß Oberbegriff des Patentanspruchs 1 bekannt, bei dem die Periodizität von Änderungen von Eigenschaften des von einer Papiermaschine hergestellten Papiers bestimmt und mit der Periodizität von Funktionen von Maschinenelementen der Papiermaschine verglichen wird.

Aus der DE 199 13 926 A1 ist ein Verfahren zur Herstellung, insbesondere zur Beeinflussung von Qualitätseigenschaften, einer Materialbahn bekannt, bei dem mittels mehrerer in Laufrichtung der Materialbahn verteilt angeordneter Sensoren ein genaues Bild von der zeitlichen Entwicklung von interessierenden Eigenschaften der Materialbahn sowie von dem Einfluss der einzelnen Bearbeitungsstationen der Maschine auf diese Eigenschaften bzw. allgemein auf die Qualität der Materialbahn gewonnen wird.

Ausgehend von diesem Stand des Technik ist es Aufgabe vorliegender Erfindung, ein Verfahren zur Ermittlung der Ursachen von Störungen in industriellen Prozessen anzugeben, das auch bei hoher Komplexität des Prozesses eine schnelle, wiederholbare und kostengünstige Ermittlung der Ursachen von Störungen erlauben und eine nachhaltige Störungsbeseitigung ermöglichen.

Die Lösung der auf das Verfahren gerichteten Aufgabe gelingt erfindungsgemäß durch ein Verfahren gemäß Patentanspruch 1. Vorteilhafte Ausgestaltungen des Verfahrens sind jeweils Gegenstand der Unteransprüche.

Mit Hilfe zeitlicher und/oder örtlicher Korrelationen lässt sich auf einfache und schnelle Weise erkennen, ob ein Wirkungszusammenhang zwischen einer Prozessgröße und der Zeit und/oder dem Ort einer Störung besteht. Die Zeit und/oder der Ort der Störung können hierbei ebenfalls durch eine Prozessgröße identifizierbar sein.

Die Prozessgrößen können durch Messsignale repräsentiert werden, die im Sinne der vorerwähnten, nicht vorveröffentlichten Patentanmeldungen DE 10202092.2 bzw. PCT/DE/03/00093 als Signale verstanden werden, die aus verschiedensten Quellen des Prozesses stammen und in beliebiger auch unterschiedlicher Form, z.B. analog, binär, numerisch und/oder als veränderliche physikalische Größe vorliegen können. Diese Signale können mit Hilfe bereits in dem Prozess vorhandener und/oder zusätzlich vorzusehender Signalgeber erfasst werden. Unter zeitlicher Korrelation wird im Rahmen der Erfindung verstanden, dass die Messsignale zweier Prozessgrößen zu einem bestimmten Zeitpunkt ein ähnliches verhalten aufweisen. Eine Ursachenbestimmung auf Basis zeitlicher Korrelationen ist insbesondere dann möglich, wenn es sich um technische Störungen, z.B. Instabilitäten oder zu kleine Dämpfungsfaktoren in einem Antriebssystem, handelt oder wenn Ursache und Wirkung räumlich nicht zu weit auseinander liegen.

Die örtliche Korrelation bezieht sich darauf, dass ein einen Prozess durchlaufendes Prozessgut (z.B. eine durchlaufende Warenbahn) und die mit diesem verbundenen Eigenschaften (z.B. Qualität, Größe, Gewicht) durch den Prozess mit eine bestimmten Geschwindigkeit laufen und sich somit an örtlich unterschiedlichen Punkten einer Anlage oder Maschine zu unterschiedlichen Zeitpunkten befinden. Mit Hilfe einer Information über die relativen Positionen der Messpunkte zueinander und die Geschwindigkeit des Prozessgutes in dem Prozess kann für jeden Messpunkt eine Zeitversatz bestimmt werden, mit dem der Messpunkt das durch den Prozess laufende Prozessgut sieht. Die Messsignale sind somit vor allem durch das Prozessgut und seine Eigenschaften miteinander korreliert. Mit Hilfe örtliche Korrelationen lassen sich somit insbesondere Störungsursachen technologischer Natur, z.B. bei einem Papierherstellungsprozess Qualitätsprobleme in der Grammatur, Löcher und ähnliches feststellen.

Die Erfassung der Messsignale und die Bestimmung der zeitlichen und örtlichen Korrelationen kann mit Hilfe geeigneter Vorrichtungen zur Datenverarbeitung automatisiert werden und somit eine schnelle, wiederholbare und kostengünstige Ermittlung der Störungsursachen ermöglichen. Mit Hilfe der zeitlichen und/oder örtlichen Korrelationen lassen sich sehr exakt Wirkungszusammenhänge zwischen den Messsignalen und der Zeit und/oder dem Ort der Störung ermitteln, so dass die Ursachen der Störungen mit hoher Genauigkeit erkannt werden können und somit eine nachhaltige Störungsbeseitigung möglich wird.

Es können hierbei zuerst die zeitlichen Korrelationen der Prozessgrößen mit der Zeit der Störung bestimmt werden. Falls hierbei keine Korrelationen festgestellt werden, kann anschließend eine Bestimmung der örtlichen Korrelationen erfolgen. Alternativ können aber auch zuerst die örtlichen Korrelationen bestimmt werden und, falls hierbei keine Korrelation festgestellt wird, anschließend die Bestimmung der zeitlichen Korrelationen erfolgen.

Besteht zwischen einer Prozessgröße und der Störung keine signifikante Korrelation, so kann ein Wirkungszusammenhang zwischen der Störung und der Prozessgröße ausgeschlossen werden.

Eine besonders genaue Ursachenbestimmung ist dann möglich, wenn zusätzlich von den Prozessgrößen diejenigen als Ursache ausgeschlossen werden, bei denen die festgestellte Korrelation eine Folgewirkung im Gegensatz zu einer Ursache der Störung ist.

Zur weiteren Erhöhung der Genauigkeit der Ursachenbestimmung können für die Teilprozesse mit (verbleibenden) Prozessgrößen mit signifikanten Korrelationen mit der Störung detaillierte Analysen durchgeführt werden. Dies kann u.a. weitere Messungen mit zusätzlichen/anderen Prozessgrößen erforderlich machen.

Gemäß einer vorteilhaften Ausgestaltung der Erfindung ist vorgesehen, dass nach Feststellung der Ursache der Störung Maßnahmen zur Beseitigung der Störungsursache erarbeitet werden. Diese Maßnahmen können abschließend technisch und/oder betriebswirtschaftlich bewertet werden. Anhand dieser Bewertung kann der Entscheidungsprozess für die Implementierung von Verbesserungsmaßnahmen vereinfacht und eine unter Kosten/Nutzen-Gesichtspunkten optimale Lösung für den Betreiber des industriellen Prozesses getroffen werden.

Der Aufwand für die Erfassung und Analyse der Prozessgrößen kann dadurch verringert werden, dass die Ursache der Störung auf einen Teilprozess aus dem Gesamtprozesses eingeschränkt wird und für die Störungsursachenermittlung nur Prozessgrößen aus diesem Teilprozess erfasst werden.

Dies kann z.B. durch eine Übertragung des aus der Mechanik bekannten Prinzips des "Freischneidens" erfolgen. Hierbei wird in einem ersten Schritt statt des gesamten Prozess nur ein die Störung aufweisender Teilprozess bzw. Teilsystem betrachtet. Durch ein "Freischneiden" des Teilprozesses werden die Schnittstellen des Teilprozesses mit dem umgebenden Gesamtprozess identifiziert und an diesen Schnittstellen physikalischen Effekte wie z.B. Kräfte, Ströme, Felder, Drücke messtechnisch erfasst. Die Messsignale für die Erfassung dieser Effekte können gegebenenfalls durch Anbau von zusätzlichen Signalgebern an diesen Schnittstellen gewonnen werden.

Falls bei einer Messung eine Korrelation eines Schnittstellensignals mit der Störung vorliegt, wurde der Teilprozess zu klein gewählt und der Teilprozess muss um den Teilprozess erweitert werden, mit dem der physikalische Effekt ausgetauscht wird. Anschließend werden nun für den vergrößerten Teilprozess in entsprechend Weise die Schnittstellen identifiziert und an diesen Schnittstellen die physikalischen Effekte auf Korrelation mit der Störung untersucht.

Falls keine Korrelation eines Schnittstellensignals mit der Störung vorliegt, ist die Fehlerursache vollständig in dem betrachteten Teilprozess enthalten. Der Teilprozess kann nun entsprechend verkleinert werden, um die Fehlerursache noch weiter einzugrenzen, oder es kann nun eine detaillierte Erfassung und Auswertung von Messsignalen aus dem Inneren des Teilprozesses erfolgen.

Die Ursache einer Störung kann somit dadurch besonders einfach auf einen Teilprozess eingeschränkt werden, wenn ein die Störung aufweisender Teilprozess des industriellen Prozesses ermittelt wird, an dessen physikalischen Schnittstellen zu dem Restprozess sich keine signifikanten Korrelationen mit der Störung zeigen.

Das erfindungsgemäße Verfahren lässt sich besonders einfach mit einer Vorrichtung zur Ermittlung der Ursachen von Störungen in industriellen Prozessen durchführen, die eine Erfassungseinheit zum Erfassen von Prozessgrößen sowie Zeit und/oder Ort einer Störung, eine Auswerteeinheit zur Bestimmung von Korrelationen zwischen den erfassten Prozessgrößen und der Zeit und/oder dem Ort der Störung und eine Ausgabeeinheit zur Ausgabe der mit der Zeit und/oder dem Ort der Störung korrelierenden Prozessgrößen aufweist.

Gemäß einer vorteilhaften Ausgestaltung der Erfindung wird das Verfahren als Servicedienstleistung durch einen Dienstleistungsanbieter durchgeführt.

Die Erfindung sowie weitere vorteilhafte Ausgestaltungen der Erfindung gemäß den Merkmalen der Unteransprüche werden im folgenden anhand von Ausführungsbeispielen in den Figuren näher erläutert. Darin zeigen:
- FIG 1: eine schematische Darstellung eines Papierherstel- lungsprozesses und einer Vorrichtung zur Ermittlung der Ursachen von Störungen in diesem Prozess,
- FIG 2: eine Darstellung des erfindungsgemäßen Verfahrens für die Ermittlung der Ursachen von Störungen in einem Prozess gemäß FIG 1 anhand eines Ablaufdia- gramms,
- FIG 3: eine Darstellung zur Erläuterung des Verfahrens zur Bestimmung der für eine Ursachenermittlung relevan- ten Prozessgrößen,
- FIG 4: ein Diagramm zur Veranschaulichung einer zeitlichen Korrelation zwischen zwei Prozessgrößen,
- FIG 5: ein Diagramm zur Veranschaulichung einer örtlichen Korrelation zwischen Prozessgrößen,
- FIG 6: eine schematische Darstellung eines in den Patent- anmeldungen DE 10202092.2 bzw. PCT/DE/03/00093 be- schriebenen Mess- und Analysesystems.

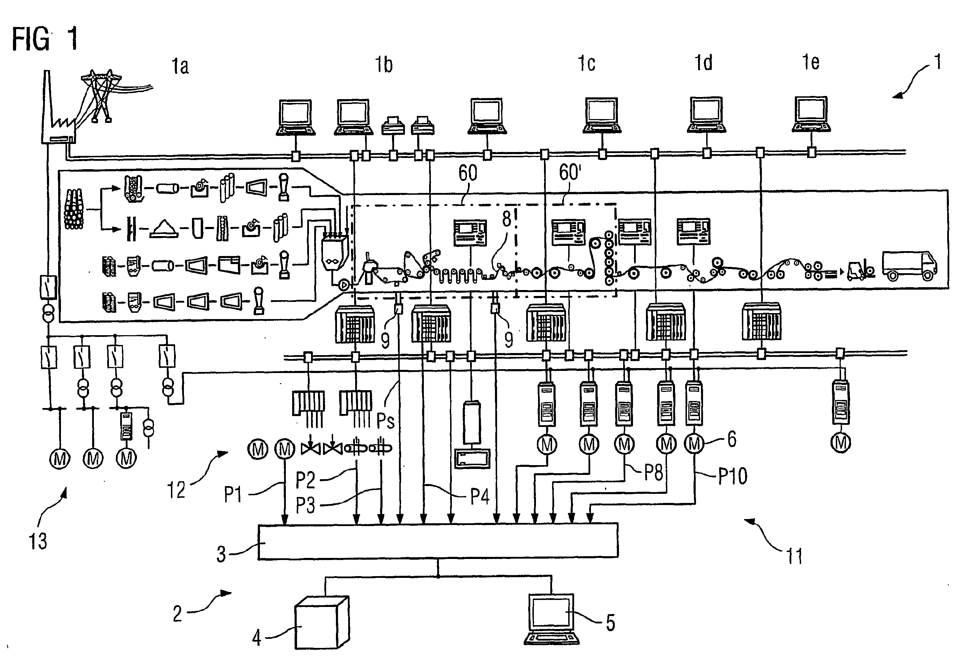

Die FIG 1 zeigt eine Anlage 1 zur Herstellung von Papier. Die Anlage 1 umfasst verschiedenste Anlagenteile, die für die verschiedenen Schritte im Herstellungsprozess für Papier benötigt werden, so z.B. eine Stoffaufbereitung 1a, eine Papiermaschine 1b, Umroller/Kalander 1c, Rollenschneider 1d, Querschneider 1e. Das Papier durchläuft als Warenbahn 8 wesentliche Teile der Anlage 1. Die Anlage 1 weist für den Antrieb, die Stromversorgung und die Steuerung bzw. Regelung der verschiedenen Komponenten des Herstellungsprozesses eine Vielzahl von Antriebskomponenten 11, Automatisierungskomponenten 12 und Energieversorgungskomponenten 13 auf.

Eine Vorrichtung 2 dient zur Ermittlung der Ursachen von Störungen in der Anlage 1. Die Vorrichtung 2 weist eine Erfassungseinheit 3, eine Auswerteeinheit 4 und eine Ausgabeeinheit 5 auf.

Die Erfassungseinheit 3 dient zur Erfassung von Prozessgrößen P1...P10 des Papierherstellungsprozesses auf der Anlage 1. Dabei kann es sich z.B. um Messsignale handeln, die mit Hilfe von in der Anlage 1 bereits vorhandenen und/oder vorzusehenden Signalgebern erfasste werden. Zur Erfassung von Abrissen der Warenbahn 8 können z.B. Lichtschranken 9 im Verlauf der Warenbahn 8 vorgesehen sein, die bei einem Bahnriss ein Signal erzeugen, das als Messsignal PS von der Vorrichtung 2 erfasst wird und es dieser ermöglicht, Zeit und Ort eines Bahnrisses festzustellen. Weiterhin kann es sich bei den Prozessgrößen um Signale von Temperatursensoren in verschiedenen Komponenten der Anlage sowie um Ströme und Spannungen elektrischer Komponenten, Drehzahlen sowie Drehmomente von Antriebskomponenten 13 handeln. Weiterhin können auch Bedienereingaben und Informationen über die Papierqualität als Prozessgrößen erfasst werden.

Die Auswerteeinheit 4 dient zur Bestimmung von Korrelationen zwischen den erfassten Prozessgrößen P1...P10 und der den Zeitpunkt und den Ort der Störung repräsentierenden Prozessgröße PS. Die Ausgabeeinheit 5 dient zur Ausgabe der Prozessgrößen P1 ... P10 mit signifikanter Korrelation mit der Prozessgröße PS.

Die Erfassung der Prozessgrößen in der Erfassungseinheit 3 kann hierbei in Echtzeit (real-time) erfolgen. Die Auswertung der erfassten Prozessgrößen kann on-line oder off-line erfolgen.

Bevorzugt ist die Erfassungseinheit 3 skalierbar und kann mindestens 500 Signale erfassen. Um auch mechanische Schwingungen und Fehler in Stromregelungen erfassen zu können, beträgt die Abtastfrequenz mindestens 40 kHz. Für eine off-line Auswertung umfasst die Erfassungseinheit 3 einen nicht näher dargestellten Datenspeicher für die Speicherung einer großen Zahl von Messdaten. Die Vorrichtung 2 kann zusätzlich noch eine ebenfalls nicht näher dargestellte Eingabeeinheit zur Eingabe eines Zeitbereiches für die Korrelationsbetrachtungen sowie von Information über die relativen Positionen der Messpunkte zueinander aufweisen.

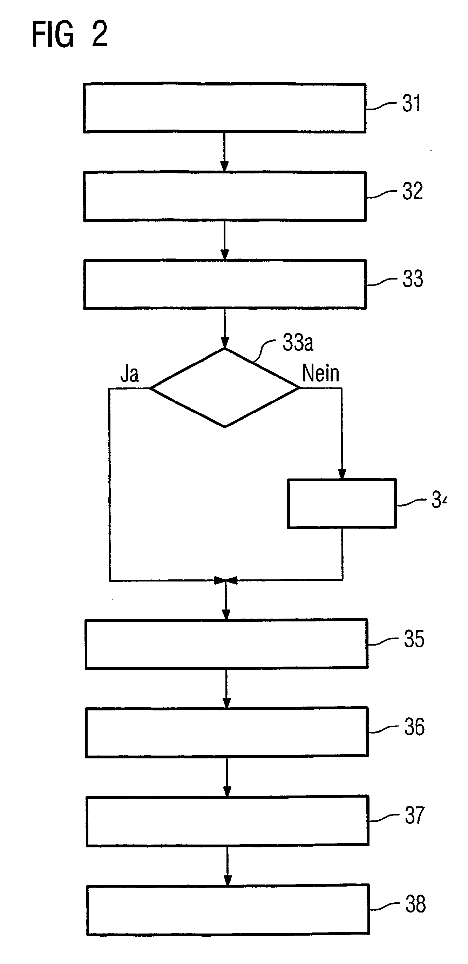

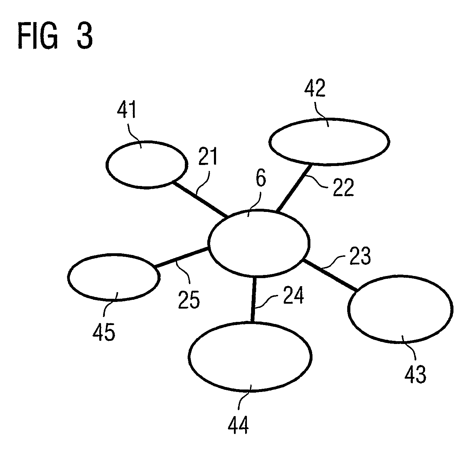

Zur Bestimmung der Ursachen der Störungen werden, wie im Ablaufdiagramm der FIG 2 dargestellt, in einem ersten Schritt 31 die für die Störungsanalyse relevanten Prozessgrößen P1... P10 ermittelt. Dies kann z.B. mittels des in FIG 3 näher erläuterten Verfahrens erfolgen.

Die relevanten Prozessgrößen P1... P10 werden anschließend in einem zweiten Schritt 32 von der Erfassungseinheit 3 über einen so langen Zeitraum erfasst, wie für die Erfassung zumindest einer Störung notwendig ist. Die Störung wird hierbei anhand der Prozessgröße PS, im folgenden als "Störungsprozessgröße" bezeichnet, identifiziert.

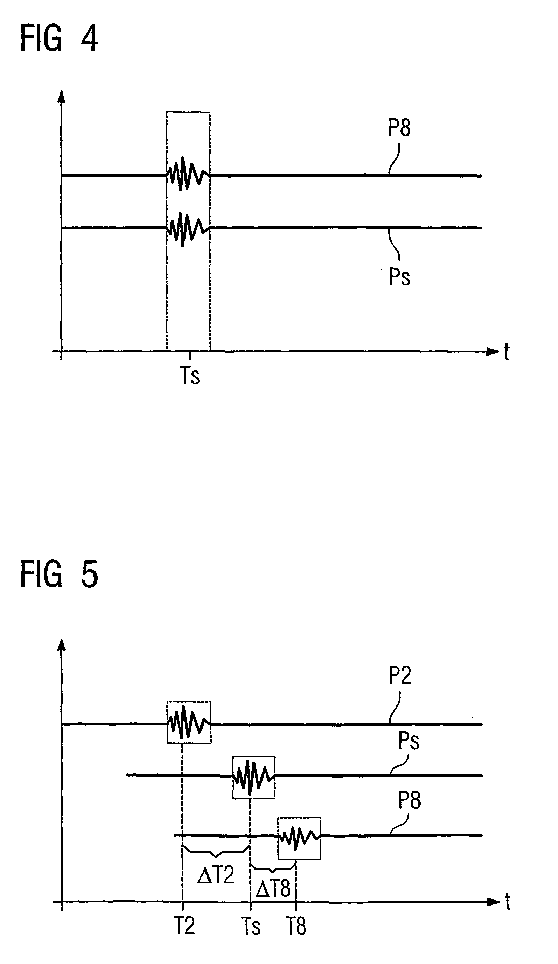

Anschließend werden in einem dritten Schritt 33 zuerst zeitliche Korrelationen zwischen den Prozessgrößen P1 ... P10 und der Störungsprozessgröße PS ermittelt. Dies erfolgt, wie in FIG 4 veranschaulicht, durch einen Vergleich, ob eine Prozessgröße, im Fall der FIG. 4 die Prozessgröße P8, zum Zeitpunkt TS der Störung ein ähnlich abweichendes Verhalten zeigt wie die Störungsprozessgröße PS. Liegt das Verhalten zeitlich etwas früher, so kann die Prozessgröße P8 vorerst als Ursache für die Störung angesehen werden. Finden sich allerdings noch Prozessgrößen, die zeitlich vor der Prozessgröße P8 bereits abnormales Verhalten zeigen, so handelt es sich bei der Prozessgröße P8 nicht um die Ursache, sondern um eine weitere Folge der Störung.

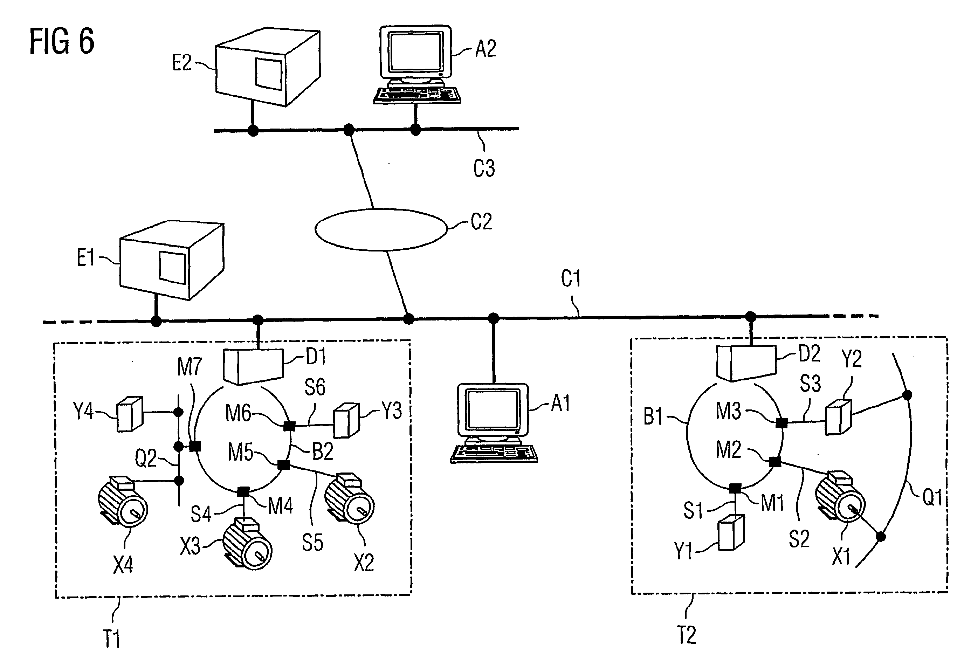

In einem Schritt 33a wird geprüft, ob zeitliche Korrelationen vorliegen. Falls keine zeitlichen Korrelationen festgestellt werden, so werden in einem vierten Schritt 34 örtliche Korrelation der Prozessgrößen mit der Störungsmessgröße PS ermittelt. Dies erfolgt z.B. dadurch, dass gemäß FIG 5 mit Hilfe von in der Auswerteeinheit 4 enthaltenen Information über die relativen Positionen der Messpunkte zueinander und die Geschwindigkeit der Warenbahn 8 in dem Prozess für jeden Messpunkt ein Zeitversatz bestimmt wird, mit dem der Messpunkt das durch den Prozess laufende Prozessgut sieht. Im Beispiel der FIG 6 weist die Prozessgröße P2 einen Offset ΔT2 und die Prozessgröße P8 einen Offset ΔT8 zu der Prozessgröße PS auf. Finden sich Abweichungen in der Prozessgröße P2 zu dem Zeitpunkt T2 = TS - ΔT2 bzw. in der Prozessgröße P8 zu dem Zeitpunkt T8 = TS + ΔT8 vor, so liegt örtliche Korrelation der Prozessgrößen P2, P8 und PS vor, d.h. die Prozessgrößen P2, P8 und PS sind über die durchlaufende Warenbahn 8 miteinander korreliert.

Werden signifikante zeitliche Korrelationen zwischen einer oder mehrerer der Prozessgrößen und der Störungsprozessgröße ermittelt, so können die Prozessgrößen ohne signifikante Korrelation als Ursachen für die Störung ausgeschlossen werden.

Für eine besonders genaue Ursachenbestimmung werden in einem fünften Verfahrensschritt 35 von den Prozessgrößen diejenigen als Ursache ausgeschlossen, bei denen die festgestellte Korrelation eine Folgewirkung im Gegensatz zu einer Ursache der Störung ist.

In einem sechsten Verfahrensschritt 36 werden zur weiteren Erhöhung der Genauigkeit der Ursachenbestimmung für die Teilprozesse, die durch die verbleibenden Prozessgrößen mit signifikanten Korrelationen mit der Störung repräsentiert werden, detaillierte Analysen durchgeführt, die zum Auffinden der Störungsursache führen.

In einem siebten Verfahrensschritt 37 werden nach Feststellung der Ursache der Störung Maßnahmen zur Beseitigung der Störungsursache erarbeitet. Diese Maßnahmen werden abschließend in einem achten Verfahrensschritt 38 technisch und/oder betriebswirtschaftlich bewertet.

Für die Ermittlung der relevanten Prozessgrößen wird ein störungsbehafteter Teilprozess, in der FIG 3 mit dem Bezugszeichen 6 versehen, definiert und sämtliche Verbindungen bzw. Schnittstellen 21 bis 25 des Teilprozesses 6 mit dem Restprozess, im Fall der FIG 3 den Teilprozessen 41 - 45, mit Hilfe der aus der technischen Mechanik bekannte Methode des "Freischneidens" identifiziert und die physikalischen Effekte wie z.B. Kräfte, Ströme, Felder, Drücke an diesen Schnittstellen 21 bis 25 messtechnisch erfasst. Die physikalischen Effekte an diesen Schnittstellen beschreiben somit die Wechselwirkung des Teilprozesses 6 mit den Teilprozessen 41 - 45 des Gesamtprozess.

Beispiel für die Verbindungen bzw. Schnittstellen 21 - 25 und physikalischen Effekte können z.B. sein:
- Verbindungen eines Anlagenelementes des Teilprozesses zu einem Fundament, das zum einen das Gewicht des Elementes trägt, zum anderen aber auch Vibrationen von anderen Teilprozessen an das Element überträgt,
- Antriebswellen, Zylinder oder ähnliche bewegliche Teile des eines Elements, die mechanische Kräfte auf das Element oder seine Teile ausüben,
- Rohre oder Kabel für hydraulische, pneumatische oder elektrische Verbindungen zwischen dem Teilprozess und seiner Umgebung,
- dem Teilprozess von anderen Teilprozessen zugeführtes Material,
- Bedienhandlungen, die eine Änderung von Einstellungen oder sonstiger Eigenschaften des Teilprozesses bewirken.

Werden bei der Anlage 1 gemäß FIG 1 Bahnrisse durch den Signalgeber 9 in der Papiermaschine 1b erfasst, so kann in einem ersten Schritt der strichliert angedeutete Teilprozess 60 betrachtet und z.B. seine Schnittstellen zu der Stoffaufbereitung 1a, zu dem Umroller/Kalander 1c sowie zur Energieversorgung 13, dem Antriebssystem 11 und der Automatisierung 12 betrachtet werden.

Im Fall eines Austausches eines physikalischen Effektes an einer Schnittstelle zu dem Umroller/Kalander 1c, d.h. einer Korrelation eines Schnittstellensignals zu dem Umroller/Kalander 1c mit der Störung, wurde der Teilprozess 60 zu klein gewählt und der Teilprozess 60 muss um den Teilprozess 60' des Umrollers/Kalanders 1c erweitert werden.

Anschließend werden nun für den erweiterten, d.h. aus den Teilprozessen 60 und 60' bestehenden, Teilprozess in entsprechend Weise die Schnittstellen identifiziert und an diesen Schnittstellen die physikalischen Effekte auf Korrelation mit der Störung überprüft.

Falls keine Korrelation eines Schnittstellensignals mit der Störung vorliegt, ist die Fehlerursache vollständig in dem erweiterten Teilprozess enthalten und es kann nun eine detaillierte Erfassung und Auswertung von Messsignalen aus dem Inneren des erweiterten Teilprozesses erfolgen.

Das Verfahren kann besonders vorteilhaft zur Ursachenermittlung genutzt werden, wenn es sich bei den Störungen um sporadische Störungen in einem kontinuierlichen Produktionsprozess oder um Abrisse von Warenbahnen handelt.

Ein besonders geeignetes Verfahren und eine besonders geeignete Vorrichtung zur Erfassung der Prozessgrößen und zur Ermittlung der Korrelationen muss Signale aus einer großen Anzahl von Quellen aufnehmen, wobei die räumliche Verteilung der Quellen sehr weit ausgedehnt sein kann. Messsignale müssen bei gleichbleibend hoher Qualität genau erfasst werden und dabei auch hohe Abtastraten unterstützen können. Die Vorrichtung muss flexibel an unterschiedliche Anlagenkonfigurationen anpassbar sein, man erwartet eine einfache und schnelle Inbetriebnahme bei niedrigem Verdrahtungs- und Konfigurationsaufwand sowie eine einfache Bedienbarkeit, vergleichbar mit dem "Plug and Play" Prinzip. Besonders wichtig ist eine rückwirkungsfreie Signalerfassung.

Die betroffenen Prozesse liegen oft in industriellen Anlagen vor, die in der Regel aus mehreren zumeist räumlich verteilten Anlagenbestandteilen bestehen. Besonders wichtig ist deshalb die Möglichkeit, auch bei räumlich weit verteilten Messpunkten und dadurch verursachten Verzögerungen bei der Erfassung der Messsignale in einer zentralen Erfassungseinheit genaue Korrelationsbetrachtungen durchführen zu können.

Die betroffenen Prozesse werden meist mit mindestens einer Automatisierungsvorrichtung gesteuert und/oder geregelt. Die zu erfassenden und zu verarbeitenden Signale können aus den verschiedensten Quellen stammen und in beliebiger auch unterschiedlicher Form, z.B. analog, binär, numerisch, als Videosignale und/oder als veränderliche physikalische Größen vorliegen.

Ein Verfahren und eine Vorrichtung, die diese Anforderungen in besonders hohem Maße erfüllen und deshalb besonders für die Erfassung der Prozessgrößen und die Ermittlung der Korrelationen geeignet sind, sind in den nicht vorveröffentlichten Patentanmeldungen DE 10202092.2 bzw. PCT/DE/03/00093 beschriebenen.

Das Verfahren und die Vorrichtung sind einheitlich und modular aufgebaut. Das zugrunde liegende Konzept ist die Trennung von Messen und Analysieren einerseits und Steuern und Regeln andererseits. Vor allem die Umsetzung dieses Konzepts ermöglicht eine weitestgehend rückwirkungsfreie Signalerfassung und eine Realisierung eines vielfältig einsetzbaren, leistungsstarken, modular und kostengünstig erweiterbaren, einheitlichen Systems der eingangs genannten Art.

In einer bevorzugten Ausführungsform des Verfahrens empfängt mindestens ein Messkopf eingangsseitig Messsignale von einem beliebigen Bussystem. Dadurch wird die weitestgehend rückwirkungsfreie Aufnahme der über das Bussystem ausgetauschten Signale und / oder die Analyse von Signalstörungen am Bussystem selbst ermöglicht.

Vorteilhaft kann das Verfahren so ausgestaltet werden, dass mindestens ein Messkopf ausgangsseitig Messsignale unmittelbar an einen Datenkonzentrator weitergibt, wodurch die Modularität des Systems weiter gesteigert wird.

Nach einer weiteren vorteilhaften Ausgestaltung des Verfahrens werden die Messköpfe und / oder Datenkonzentratoren automatisch erkannt. Nach einer weiteren vorteilhaften Ausgestaltung erfolgt der Aufbau der Kommunikation zwischen Datenkonzentratoren und Messköpfen automatisch unter Zuhilfenahme von mindestens einer Kommunikationseinheit. Beide Ausgestaltungen erhöhen in entscheidender Weise die Modularität des Verfahrens, das auf diese Weise sehr einfach und mit geringen Kosten und Aufwand verbunden erweitert werden kann.

In einer bevorzugten Ausführungsform des Verfahrens werden Zeitsignale dadurch generiert, dass Messsignale mit einem Zeitstempel versehen werden. Dadurch wird eine Auswertung der erfassten Messsignale, insbesondere für die Korrelationsbetrachtungen, erheblich erleichtert und zwar insbesondere im Hinblick auf komplexe, sich über mehrere Teilprozesse erstreckende Zusammenhänge.

Mit Vorteil wird das Verfahren so erweitert, dass mindestens ein Messkopf ein standardisiertes Zeitsignal empfängt. Die Nutzung dieses Zeitsignals als Referenzzeit ermöglicht eine eindeutige und genaue zeitliche Zuordnung von Messsignalen über die Grenzen des industriellen Prozesses hinaus, auf den sich das vorteilhafte Verfahren bezieht.

In weiterer Ausgestaltung wird das standardisierte Zeitsignal von einem Global Positioning System (GPS) erfasst. Der Vorteil dieser Ausgestaltung liegt in der weltweiten Verfügbarkeit von GPS und in den geringen Kosten, die mit der Erfassung dieses standardisierten Zeitsignals verbunden sind.

Nach einer weiteren vorteilhaften Ausgestaltung des Verfahrens werden die aus mindestens einem Datenkonzentrator stammenden Zeit- und / oder Messsignale mithilfe von mindestens einer programmierbaren Auswerteeinheit verarbeitet, wobei sich die programmierbare Auswerteeinheit räumlich beliebig entfernt von den Teilprozessen befinden kann. So erhöht sich die Flexibilität und die universelle Einsetzbarkeit des Verfahrens. Eine besonders wirtschaftliche Ressourcenausnutzung wird durch die für die Datenkonzentratoren und Auswerteeinheiten vorgesehene konzeptionelle Aufgabentrennung erreicht. Vorzugsweise kann das Verfahren so ausgestaltet werden, dass mindestens eine Anzeigeeinheit zur Visualisierung von aus den Messsignalen und / oder Zeitsignalen generierten Daten verwendet wird, wobei sich die Anzeigeeinheit räumlich beliebig entfernt von den Teilprozessen befinden kann. Eine derartige Erweiterung erhöht Modularität und Flexibilität des erfindungsgemäßen Verfahrens, wobei die räumliche Unabhängigkeit der Anzeigeeinheit von den industriellen Teilprozessen zudem Funktionalitäten wie die Fernanalyse ermöglicht und dadurch sowohl die Effizienz und Wirtschaftlichkeit der intellektuellen Auswertung von Messergebnissen erhöht als auch das Heranziehen von Expertenwissen zur Auswertung wesentlich erleichtert.

Das Verfahren lässt sich mit einer Vorrichtung zum Erfassen und Verarbeiten von Signalen von industriellen Prozessen durchführen, die aus mindestens einem Teilprozess bestehen, wobei der industrielle Prozess von mindestens einer mit einem oder mehreren Bussystemen ausgestatteten Automatisierungsvorrichtung gesteuert und / oder geregelt wird.

Die vorteilhafte Vorrichtung ist **dadurch gekennzeichnet, dass** mindestens ein Messbussystem vorgesehen ist, das nicht identisch mit dem oder den Bussystemen der Automatisierungsvorrichtung ist, sowie dass mindestens ein Messkopf zur Erfassung von Messsignalen vorgesehen ist, der eingangsseitig mit vorhandenen und / oder zusätzlich vorzusehenden Signalgebern des industriellen Prozesses verbunden ist und ausgangsseitig Signale in einer vorgegebenen Form an das Messbussystem weitergibt, und dass ein oder mehrere Datenkonzentratoren mit dem Messbussystem verbunden sind.

In einer vorteilhaften Ausgestaltung der Vorrichtung ist mindestens ein Messkopf, der mit einem Signalgeber verbunden ist, der ein standardisiertes Zeitsignal liefert, am oberen Abschluss einer Einrichtung angebracht, innerhalb derer oder mit deren Hilfe der industrielle Prozess durchgeführt wird.

Diese Anbringung ermöglicht einen verbesserten Empfang des standardisierten Zeitsignals, sofern dieses drahtlos und insbesondere mithilfe von nicht ausschließlich erdgebundenen Übermittlungseinrichtungen wie zum Beispiel Satelliten übermittelt wird.

Nach einer weiteren vorteilhaften Ausgestaltung der Vorrichtung sind die Datenkonzentratoren derart erweiterbar beschaffen, dass die jeweils benötigte Zahl von Messbussystemen und / oder Messköpfen mit ihnen verbunden werden kann. So wird das unkomplizierte Einbinden von Messbussystemen und / oder Messköpfen Zeit und Kosten sparend möglich. Das System wird auf diese Weise beliebig und einfach erweiterbar.

FIG 6 zeigt eine schematische Darstellung eines in den Patentanmeldungen DE 10202092.2 bzw. PCT/DE/03/00093 beschriebenen Mess- und Analysesystems. Im gezeigten Beispiel ist der Prozess in zwei Teilprozesse T1 und T2 aufgegliedert. Innerhalb dieser Teilprozesse T1 und T2 sollen Signale erfasst und verarbeitet werden.

An den Anlagenbestandteilen X1 bis X3 und Y1 bis Y3 befinden sich nicht näher dargestellte Signalgeber S1 bis S6, die mit entsprechenden Messköpfen M1 bis M6 verbunden sind. Bei den in der Zeichnung beispielhaft dargestellten Anlagenbestandteilen handelt es sich um die Motoren X1 bis X4 und die Schaltschränke Y1 bis Y4.

Es existieren die Bussysteme Q1 und Q2 und weitere nicht näher dargestellte Bussysteme, die der Automatisierungseinrichtung der industriellen Teilprozesse T1 und T2 zuzuordnen sind. Die Bussysteme Q1 und Q2 werden zum Steuern und Regeln der Anlagenkomponenten X1 und Y2 beziehungsweise X4 und Y4 genutzt. Wie beispielhaft am Bussystem Q2 und dem Messkopf M7 gezeigt wird, können Messköpfe auch mit Bussystemen, die zum Steuern und Regeln dienen, verbunden werden.

Die Messköpfe M1 bis M7 sind ausgangsseitig mithilfe der Messbussysteme B1 und B2 mit den Datenkonzentratoren D1 und D2 verbunden. Eine Aufgabe der Datenkonzentratoren D1 und D2 ist die Verarbeitung der Zeit- und/oder Messsignale der Messköpfe M1 bis M7.

Zur weiteren Signal- und Datenverarbeitung sind die Auswerteeinheiten E1 und E2 vorgesehen. Die Anzeigeeinheiten A1 und A2 ermöglichen es, von den Datenkonzentratoren D1 und D2 beziehungsweise den Auswerteeinheiten E1 und E2 verarbeitete Messdaten zu visualisieren. Die Auswerteeinheiten E1 und E2, die Anzeigeeinheiten A1 und A2 und die Datenkonzentratoren D1 und D2 sind untereinander über lokale und/oder räumlich unbegrenzte Datenübermittlungsnetze C1 bis C3 verbunden.

Im Ausführungsbeispiel werden Zeitsignale dadurch generiert, dass Messsignale mit einem synchron laufenden Zeitstempel versehen werden.

Die Messköpfe M1 bis M7 sind so ausgelegt, dass sie numerische, binäre oder analoge Signale von Signalgebern empfangen. Vorgesehen sind aber auch in der Zeichnung nicht dargestellte Messköpfe, die physikalische Messgrößen wie zum Beispiel Schwingungsdauer oder Temperatur erfassen. Messköpfe können mit zum Steuern und Regeln dienenden Bussystemen wie beispielsweise PROFIBUS oder CAN-Bus verbunden werden. Der mit dem Bussystem Q2 verbundene Messkopf M7 erfasst auf dem Bussystem Q2 anliegende Daten, die dazu dienen können, Signalstörungen auf dem Bussystem Q2 zu analysieren oder weitere Messdaten zur Verfügung zu stellen unter der Voraussetzung, dass dies weitestgehend rückkopplungsfrei und zeitgenau geschieht. Unter dem Begriff zeitgenau wird synchron in der Auflösung der halben minimalen Abtastzeit verstanden.

Alle Messköpfe M1 bis M7 bestehen aus einem einheitlichen bidirektionalen Kommunikationsteil und verfügen über die Funktionalitäten zur selbstständigen Erfassung und Generierung der Messdaten und über Treiber für die Entgegennahme von Daten vom Datenkonzentrator. Die Messbussysteme B1 und B2 benutzen ein einheitliches Übertragungsprotokoll und basieren einheitlich auf Lichtwellenleitertechnologie, um minimalen Verkablungs- und Konfigurationsaufwand und eine hohe Störungsunanfälligkeit zu gewähren. Es ist möglich jedoch nicht näher dargestellt, dass Messköpfe unmittelbar mit einem Datenkonzentrator D1 bzw. D2 verbunden werden. Die Anordnung aus Datenkonzentrator und gestecktem Messkopf ergibt dann eine Einheit, was gegebenenfalls mit Platz- und Kostenersparnis verbunden ist. Die Datenkonzentratoren D1 und D2 sind bezüglich der Anzahl anzubindender Messbussysteme B1 und B2 bzw. direkt zu steckender Messköpfe erweiterbar konzipiert.

Jeder der Datenkonzentratoren D1 und D2 beinhaltet mindestens eine Recheneinheit und mindestens eine Kommunikationseinheit.

Aufgabe der Kommunikationseinheit ist der eigenständige, automatische Betrieb der Messbussysteme B1 und B2 der Vorrichtung, der Aufbau der Kommunikation mit den angeschlossenen Messköpfen M1 bis M7 über die Messbussysteme B1 und B2, sowie die automatische Erfassung der sich im System befindenden Komponenten und die automatische Kompatibilitätsüberwachung einzelner Komponenten. In jeder Kommunikationseinheit wird eine strukturierte Abspeichermatrix bereitgestellt, in der für jeden dem Datenkonzentrator zugeordneten Messkopf und jedes zugeordnete Mess- oder Zeitsignal eine eindeutige Adresse vorliegt. Die Kommunikationseinheiten ermöglichen zudem die automatische Synchronisation der Messvorgänge aller Messköpfe und aller im System existierenden Datenkonzentratoren auf eine gemeinsame Zeitbasis. Kommunikationseinheiten verfügen über Mittel zur Selbstdiagnose, Mittel zur Einkopplung von Fremdsignalen und die Funktionalität zur automatischen Lastverteilung zwischen den im System eingesetzten Datenkonzentratoren.

Aufgabe der Recheneinheit ist eine Verarbeitung von Zeit- und Messsignalen. Die Recheneinheit führt eine zeitliche Vektorisierung der eingehenden Daten durch und archiviert die Vektoren auf Festwertspeicher um Datenverluste zu verhindern. Aufgabe der Recheneinheit ist zudem die Berücksichtung unterschiedlicher Abtastraten, die Glättung der Messsignale und wenn notwendig die Interpolation auf gemeinsame Abtastzeitpunkte.

Die Auswerteeinheiten E1 und E2 verfügen über Funktionalitäten zur weitergehenden Verarbeitung von Mess- und Zeitsignalen aus verschiedenen Datenkonzentratoren D1 und D2. Die Auswerteeinheiten E1 und E2 sind mittels eines graphischen Editors benutzerprogrammierbar und verfügen über eine Bibliothek an Funktionalitäten beispielsweise zur Filterung oder Transformation von Messsignalen oder Signalvektoren.

Mithilfe der Anzeigeeinheiten A1 und A2 können ausgewählte Messdaten in Echtzeit graphisch dargestellt werden. Auf die Auswerteeinheiten E1 und E2 beziehungsweise auf die Anzeigeeinheiten A1 und A2 kann sowohl lokal zugegriffen werden als auch mittels räumlich begrenzter oder unbegrenzter Datenübermittlungsnetze. Die Auswerteeinheiten E1 und E2 unterstützen automatische Überwachung, indem sie bei vorbestimmten Datenkonstellationen Meldungen absetzen um zum Beispiel einen Alarm an mindestens einer der Anzeigeeinheiten A1 und A2 auszulösen. Dies kann zum Beispiel mithilfe einer E-Mail oder aber auch mithilfe einer Kurzmitteilung über ein Mobilfunknetz erfolgen.

Während die Messbussysteme B1 und B2 einheitlich auf Lichtwellenleitertechnik konzipiert sind, ist dies bei den Datenübermittlungsnetzen C1 bis C3 nicht der Fall. In der Zeichnung stellen die Datenübermittlungsnetze C1 und C3 lokale Netze mit hoher Übertragungsrate und Verwendung der TCP / IP Protokollfamilie dar. Das Datenübermittlungsnetz C2 ist räumlich deutlich weiter ausgedehnt und stellt ein digitales Telekommunikationsnetz dar.

Probleme, die über einzelne Teilprozesse T1 und T2 hinausreichen, können mithilfe der Datenkonzentratoren D1 und D2 sowie den räumlich von den Teilprozessen T1 und T2 entfernt vorgesehenen Auswerteeinheiten E1 und E2 und Anzeigeeinheiten A1 und A2 zuverlässig erkannt und analysiert werden. Dabei wird beispielsweise externen Experten die Problemanalyse und das Verständnis von Zusammenhängen dadurch erleichtert, dass Messsignale mit einem auf einer einheitlichen Systemzeit basierenden und gegebenenfalls standardisierten Zeitstempel versehen werden, was über die bloße Synchronisation der Messsignale hinausgeht.

Die Messbussysteme B1 und B2 und die Messköpfe M1 bis M7 können bei Umbauten innerhalb des industriellen Prozesses den durch den Umbau bedingten neuen Gegebenheiten einfach angepasst beziehungsweise dementsprechend erweitert werden. Die Entkopplung der Mess- und Analyseeinrichtungen von vorhandenen Automatisierungseinrichtungen des industriellen Prozesses ermöglicht darüber hinaus nicht nur einen hohen Grad an Rückwirkungsfreiheit bei der Messdatenerfassung, sondern auch eine gleichförmig Messdatenerfassung und -analyse bei Umbauten innerhalb des industriellen Prozesses. So wird ein direkter Vergleich und die Analyse von Prozessmerkmalen vor und nach einem Umbau ermöglicht.

## Patentansprüche

1. Verfahren zur Ermittlung der Ursachen von Störungen in industriellen Prozessen, insbesondere kontinuierlichen Prozessen mit durchlaufenden Warenbahnen, wobei
- Prozessgrößen (P1 ... P10) sowie die Zeit und/oder der Ort einer Störung erfasst werden und
- Korrelationen zwischen den erfassten Prozessgrößen und der Zeit und/oder dem Ort der Störung bestimmt werden,
**dadurch gekennzeichnet, dass** von den Prozessgrößen (P1 ... P10) diejenigen als Ursache ausgeschlossen werden, bei denen die festgestellte Korrelation eine Folgewirkung im Gegensatz zu einer Ursache der Störung ist.

2. Verfahren nach Anspruch 1,
**dadurch gekennzeichnet, dass** von den Prozessgrößen (P1 ... P10) diejenigen als Ursache der Störung ausgeschlossen werden, die keine signifikante Korrelation mit der Störung aufweisen.

3. Verfahren nach einem der vorhergehenden Ansprüche,
**dadurch gekennzeichnet, dass** für die Teilprozesse mit Prozessgrößen (P1 ... P10) mit signifikanten Korrelationen mit der Störung detaillierte Analysen durchgeführt werden.

4. Verfahren nach einem der vorhergehenden Ansprüche,
**dadurch gekennzeichnet, dass** Maßnahmen zur Beseitigung der Ursachen der Störungen erarbeitet werden.

5. Verfahren nach Anspruch 4,
**dadurch gekennzeichnet, dass** die Maßnahmen technisch und wirtschaftlich bewertet werden.

6. Verfahren nach Anspruch 1,
**dadurch gekennzeichnet, dass** ein die Störung aufweisender Teilprozess des industriellen Prozesses ermittelt wird, an dessen physikalischen Schnittstellen zu dem Restprozess sich keine signifikanten Korrelation mit der Störung zeigen.

7. Verfahren nach Anspruch 6,
**dadurch gekennzeichnet, dass** für die Ursachenermittlung nur Prozessgrößen aus dem Teilprozess erfasst werden.

8. Verfahren nach Anspruch 1,
**dadurch gekennzeichnet, dass** zeitliche Korrelationen zur Bestimmung technischer Störungen benutzt werden.

9. Verfahren nach Anspruch 1,
**dadurch gekennzeichnet, dass** örtliche Korrelationen zur Bestimmung technologischer Störungen benutzt werden

10. Verfahren nach einem der vorhergehenden Ansprüche,
**dadurch gekennzeichnet, dass** es sich bei den Störungen um sporadische Störungen in einem kontinuierlichen Produktionsprozess handelt.

11. Verfahren nach einem der vorhergehenden Ansprüche,
**dadurch gekennzeichnet , dass** es sich bei den Störungen um Abrisse von Warenbahnen handelt.

12. Verfahren nach einem der vorhergehenden Ansprüche,
**dadurch gekennzeichnet, dass** es von einem Dienstleistungsanbieter durchgeführt wird.

## Claims

1. Method for determining the causes of failures in industrial processes, in particular continuous processes with continuous webs, with
- process variables (P1 ... P10) and the time and/or location of a failure being detected and
- correlations being determined between the detected process variables and the time and/or location of a failure,
**characterised in that**
those process variables (P1 ... P10) for which the established correlation is a consequential effect rather than a cause of the failure are excluded as the cause.

2. Method according to claim 1,
**characterised in that** those process variables (P1 ... P10) exhibiting no significant correlation with the failure are excluded as the cause of the failure.

3. Method according to one of the preceding claims,
**characterised in that** detailed analyses are carried out for the sub-processes with process variables (P1 ... P10) with significant correlation with the failure.

4. Method according to one of the preceding claims,
**characterized in that** measures are worked out to eliminate the causes of the failures.

5. Method according to claim 4,
**characterized in that** the measures are evaluated technically and economically.

6. Method according to claim 1,
**characterized in that** a sub-process of the industrial process exhibiting the failure is determined, at whose physical interfaces with the remainder of the process there is no significant correlation with the failure.

7. Method according to claim 6,
**characterized in that** only process variables from the sub-process are detected for cause determination purposes.

8. Method according to claim 1,
**characterized in that** time correlations are used to determine technical failures.

9. Method according to claim 1,
**characterized in that** location correlations are used to determine technological failures.

10. Method according to one of the preceding claims,
**characterized in that** the failures are sporadic failures in a continuous production process.

11. Method according to one of the preceding claims,
**characterized in that** the failures are web breaks.

12. Method according to one of the preceding claims,
**characterized in that** it is implemented by a service provider.

## Revendications

1. Procédé de détermination de causes de pannes dans des processus industriels, notamment dans des processus continus ayant des bandes en feuille passante, dans lequel
- on relève des grandeurs ( P1..... P10 ) de processus ainsi que l'instant et/ou le lieu d'une panne, et
- on détermine des corrélations entre les grandeurs de processus relevées et l'instant et/ou le lieu de la panne,
**caractérisé en ce que**
parmi les grandeurs ( P1 ... P10 ) de processus, on exclut, comme causes, celles pour lesquelles la corrélation constatée est une conséquence contrairement à une cause de la panne.

2. Procédé suivant la revendication 1,
**caractérisé en ce que,** parmi les grandeurs ( P1 ... P10 ) de processus, on exclut, comme causes de la panne, celles qui n'ont pas de corrélation significative avec la panne.

3. Procédé suivant l'une des revendications précédentes,
**caractérisé en ce que,** pour les sous-processus, on effectue des analyses détaillées avec des grandeurs ( P1 ... P10 ) de processus ayant des corrélations significatives avec la panne.

4. Procédé suivant la revendication 4,
**caractérisé en ce que** l'on élabore des mesures pour éliminer les causes des pannes.

5. Procédé suivant la revendication 4,
**caractérisé en ce que** l'on évalue les mesures du point de vue technique et économique.

6. Procédé suivant la revendication 1,
**caractérisé en ce qu'**on détermine un sous-processus ayant une panne du processus industriel, aux interfaces physiques duquel avec le reste du processus il n'apparaît pas de corrélation significative avec la panne.

7. Procédé suivant la revendication 6,
**caractérisé en ce que,** pour la détermination des causes, on ne relève que des grandeurs de processus provenant du sous-processus.

8. Procédé suivant la revendication 1,
**caractérisé en ce que** l'on utilise des corrélations dans le temps pour la détermination de pannes techniques.

9. Procédé suivant la revendication 1,
**caractérisé en ce que** l'on utilise des corrélations dans l'espace pour la détermination de pannes technologiques.

10. Procédé suivant l'une des revendications précédentes,
**caractérisé en ce que** les pannes sont des pannes sporadiques dans un processus de production en continu.

11. Procédé suivant l'une des revendications précédentes,
**caractérisé en ce que** les pannes sont des ruptures de bandes en feuille.

12. Procédé suivant l'une des revendications précédentes,
**caractérisé en ce qu'**il est effectué par un fournisseur de services.
